Europäisches Patentamt

(19) European Patent Office

Office européen des brevets

(11) **EP 0 930 824 B1**

(12) **EUROPÄISCHE PATENTSCHRIFT**

(45) Veröffentlichungstag und Bekanntmachung des Hinweises auf die Patenterteilung:
**31.07.2002 Patentblatt 2002/31**

(51) Int Cl.$^7$: **A01N 65/00**, C05G 3/02, C05D 9/02

(21) Anmeldenummer: **97942002.3**

(22) Anmeldetag: **09.09.1997**

(86) Internationale Anmeldenummer:
**PCT/EP97/04904**

(87) Internationale Veröffentlichungsnummer:
**WO 98/11782 (26.03.1998 Gazette 1998/12)**

(54) **Fungizide Mischung, Deren Verwendung und sie enthaltende Mittel**

Fungicidal mixture, its use and agents containing the same

Melange fongicide, son utilisation et agents le contenant

(84) Benannte Vertragsstaaten:
**AT BE CH DE DK ES FI FR GB GR IE IT LI NL PT SE**

(30) Priorität: **18.09.1996 DE 19638021**

(43) Veröffentlichungstag der Anmeldung:
**28.07.1999 Patentblatt 1999/30**

(73) Patentinhaber: **BASF AKTIENGESELLSCHAFT 67056 Ludwigshafen (DE)**

(72) Erfinder:
 • **STRATHMANN, Siegfried**
  **D-67117 Limburgerhof (DE)**
 • **SCHERER, Maria**
  **D-76829 Landau (DE)**
 • **LORENZ, Gisela**
  **D-67434 Neustadt (DE)**
 • **BARDINELLI, Ted, Robert**
  **Durham, NC 27713 (US)**

(56) Entgegenhaltungen:
 **EP-A- 0 053 246        EP-A- 0 173 069**
 **EP-A- 0 307 510**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

**Beschreibung**

Die vorliegende Erfindung betrifft eine Mischung, bestehend im wesentlichen aus

a) einer anwendungsfähigen Aufbereitung der Pflanze Reynoutria sachalinensis
und

b) einem Stickstoff-Dünger, welcher 1 bis 10 Gew.-% pflanzenverfügbares Magnesium und jeweils von 0,001 bis 5 Gew.-% eines oder mehrerer der folgenden Elemente in wasserlöslicher Form enthält: Bor, Kupfer, Eisen, Mangan, Molybän und Zink,

in einer synergistisch wirksamen Menge.

Außerdem betrifft die Erfindung Mittel, welche diese Mischung enthalten, ein Verfahren zur Verhütung des Befalls durch pflanzenpathogene Pilze und zur Bekämpfung von pflanzenpathogenen Pilzen mit der Mischungskomponente (a) und der Mischungskomponente (b) und die Verwendung der Mischungskomponente (a) und der Mischungskomponente (b) zur Herstellung derartiger Mischungen.

Die fungizide Wirkung der Mischungskomponente (a) ist bekannt aus EP-A 307 510.

Für die Mischungskomponente (b) war bisher keine Wirkung gegen pflanzenpathogene Pilze bekannt.

Im Hinblick auf eine Senkung der Aufwandmengen und eine Verbesserung des Wirkungsspektrums der Mischungskomponente (a) lagen der vorliegenden Erfindung Mischungen als Aufgabe zugrunde, die bei verringerter Gesamtmenge an ausgebrachten Wirkstoffen eine synergistisch verbesserte Wirkung gegen pflanzenpathogenen Pilzen aufweisen.

Diese Aufgabe löst die eingangs definierte Mischung. Es wurde auch ein Verfahren zur Verhütung des Befalls durch pflanzenpathogene Pilze und zur Bekämpfung von pflanzenpathogenen Pilzen mit der Mischungskomponente (a) und der Mischungskomponente (b) und die Verwendung der Mischungskomponente (a) und der Mischungskomponente (b) zur Herstellung derartiger Mischungen gefunden.

Anwendungsfähige Aufbereitungen der Pflanze Reynoutria sachalinensis können nach verschiedenen bekannten Verfahren hergestellt werden (vgl. EP-A 307 510). Für die erfindungsgemäße Mischung sind flüssige Formulierungen bevorzugt, welche durch Extraktion der Pflanze gewonnen werden können. Ganz besonders bevorzugt sind ethanolische oder wäßrig-ethanolische Extrakte.

Die Mischungskomponente (b) läßt sich routinemäßig aus bekannten Chemikalien zusammenstellen.

Die Spurenelemente Kupfer, Eisen, Mangan und Zink setzt man vorzugsweise in Form ihrer Chloride, Nitrate, Sulfate oder Carbonate ein, welche gut wasserlöslich sind, z.B. Kupfer(II)sulfat, Eisen(III)sulfat oder Eisen(II)sulfat, Mangancarbonat und Zinksulfat. Auf die Natur der Anionen kommt es dabei normalerweise nicht an.

Bor wird meist als Natriumtetraborat und vor allem als Borsäure zugegeben. Molybän wird normalerweise als Ammoniummolybdat eingesetzt.

Die bevorzugten Mengenbereiche der Spurennährstoffe in der Mischungskomponente (b) sind (in Gew.%, bezogen auf festes (b)):

| | | |
|---|---|---|
| Bor | 0,03 bis 0,1, | vor allem 0,05 bis 0,08, |
| Kupfer | 0,3 bis 1, | vor allem 0,5 bis 0,8, |
| Eisen | 0,03 bis 0,1, | vor allem 0,05 bis 0,08, |
| Mangan | 1 bis 5, | vor allem 2 bis 4, |
| Molybdän | 0,005 bis 0,03, | vor allem 0,01 bis 0,025, |
| Zink | 0,01 bis 0,05, | vor allem 0,02 bis 0,04. |

Das pflanzenverfügbare Magnesium, welches bei Düngern üblicherweise in wasserlösliches Magnesiumoxid umgerechnet angegeben wird, kommt normalerweise in Form einer wasserlöslichen Magnesiumverbindung zum Einsatz, vorzugsweise als Magnesiumoxid, Magnesiumchlorid, Magnesiumnitrat oder Magnesiumsulfat oder deren Gemischen.

Der Anteil des Magnesiums an der Mischungskomponente (b) liegt vorzugsweise bei 3 bis 9 und vor allem bei 4,5 bis 7,5 Gew.-%.

Als Stickstoffdünger eignen sich solche Stoffe, welche Stickstoff in Form von Ammonium-, Nitrat- oder Carbamidstickstoff enthalten wie Ammoniak, Salpetersäure, Ammoniumchlorid, Ammoniumsulfat, Ammoniumcarbonat, Ammoniumnitrat, Harnstoff und Magnesiumnitrat oder deren Gemische.

Der Anteil des Stickstoffdüngers an der Mischungskomponente (b) liegt normalerweise bei 50 bis 98, vorzugsweise bei 70 bis 94 und vor allem bei 80 bis 90 Gew.-%.

Geeignete feste oder flüssige Präparate, welche den Stickstoff-Dünger und das pflanzenverfügbare Magnesium enthalten, können auch zunächst separat hergestellt werden (in Anlehnung an DE-A 31 46 015).

Der Mischungskomponente (b) können darüberhinaus noch Komplexbildner zugesetzt werden, welche die Wasserlöslichkeit der Ausgangsstoffe mit Metallkationen und die Aufnahme der Spurenelemente durch die Cuticula der Pflanzen unterstützen.

Geeignet Komplexbildner sind N-Carboxyalkylaminosäuren wie Nitrilotriessigsäuren ($H_3$NTA), Hydroxyethylethylendiamintriessigsäure ($H_3$EDTA), Cyclohexan-1,2-diamintetraessigsäure ($H_4$CDTA), vorzugsweise Diethylentriaminpentaessighsäure ($H_5$DPTA) und vor allem Ethylendiamintetraessigsäure ($H_4$EDTA) sowie deren Salze, insbesondere die Natriumsalze, und Gemische dieser Komplexbildner. Bevorzugte Komplexbildner sind Ethylendiamin-N,N,N', N'-tetraessigsäure Tetranatriumsalz und N-(2-Hydroxyethyl)ethylendiamintriessigsäure Trinatriumsalz, insbesondere im Gemisch und vor allem im Gewichtsverhältnis von 4:1 bis 2:1.

Der Anteil der Komplexbildner an den Mischungskomponenten (b) beträgt normalerweise 1 bis 7, vorzugsweise 2 bis 6 und vor allem 3 bis 5 Gew.-%, bezogen auf die Mischungskomponente (b).

Zur Herstellung der Mischungskomponente (b) kann man die Inhaltsstoffe in den entsprechenden Mengen zusammenfügen und mischt und vermahlt sie mit den üblichen Techniken bis zur Homogenität.

Aufgrund von Sicherheitsüberlegungen bei der Verwendung von Ammoniumnitrat, aber auch wegen der besseren Dosierbarkeit kann es von Vorteil sein, die Bestandteile der Mischungskomponenten (b) teilweise oder alle zunächst mit Wasser aufzunehmen und anschließend zu einer wäßrigen Formulierung der Mischungskomponente (b) zusammenzufügen, welche gewünschtenfalls zu einem lagerfähigen Produkt getrocknet werden kann.

Im Hinblick auf die Verwendung der erfindungsgemäßen Mischung in flüssiger Form verwendet man vorzugsweise soviel Wasser, daß die Bestandteile vollständig gelöst sind.

Vorteilhafterweise stellt man den pH-Wert der so erhältlichen Lösungen oder Suspensionen auf einen Wert von 3,5 bis 6 ein. Als Basen eignen dabei sich Alkalimetall- und Erdakalimetallhydroxide und -carbonate. Geeignete Säuren sind Schwefelsäure, Salpetersäure und Phosphorsäure.

Im übrigen sind die Stickstoffdünger und Spurenelementdünger, insbesondere auch ihre Handhabung und die Herstellung ihrer Lösungen und Suspensionen dem Fachmann bekannt und bedürfen daher keiner weiteren Erläuterungen (vgl. z.B. DE-A EP-A 53 246 und EP-A 173 069).

Bevorzugt bestehen die erfindungsgemäßen Mischungen zu 93 bis 100, vor allem zu 95 bis 98 Gew-% aus der Mischungskomponente (a) und der Mischungskomponente (b).

Die Mischungen können jedoch auch noch weitere Wirkstoffe gegen pflanzenpathogene Pilze oder gegen andere Schädlinge wie Insekten, Spinntiere oder Nematoden enthalten oder man kann ihnen herbizide oder wachstumsregulierende Wirkstoffe oder weitere Düngemittel beimischen, welche die Bilanz der Inhaltsstoffe der Mischungskomponente (b) nicht beeinträchtigen.

Die erfindungsgemäßen Mischungen bzw. die gleichzeitig, und zwar gemeinsam oder getrennt angewandten Mischungskomponenten (a) und (b) zeichnen sich durch eine hervorragende Wirkung gegen ein breites Spektrum von pflanzenpathogenen Pilzen, insbesondere aus der Klasse der Ascomyceten, Basidiomyceten, Phycomyceten und Deuteromyceten aus. Sie sind z.T. systemisch wirksam und können daher auch als Blatt- und Bodenfungizide eingesetzt werden.

Besondere Bedeutung haben sie für die Verhütung (präventive Wirkung) und Bekämpfung (kurative Wirkung) einer Vielzahl von pflanzenpathogenen Pilzen an verschiedenen Kulturpflanzen wie Baumwolle, Gemüsepflanzen (z. B. Gurken, Bohnen und Kürbisgewächse), Gerste, Gras, Hafer, Kaffee, Mais, Obstpflanzen, Reis, Roggen, Soja, Wein, Weizen, Zierpflanzen, Zuckerrohr sowie an einer Vielzahl von Samen.

Insbesondere eignen sie sich zur Bekämpfung der folgenden pflanzenpathogenen Pilze: Erysiphe graminis (echter Mehltau) an Getreide, Erysiphe cichoracearum und Sphaerotheca fuliginea an Kürbisgewächsen, Podosphaera leucotricha an Äpfeln, Uncinula necator an Reben, Puccinia-Arten an Getreide, Rhizoctonia-Arten an Baumwolle, Reis und Rasen, Ustilago-Arten an Getreide und Zuckerrohr. Venturia inaequalis (Schorf) an Äpfeln, Helminthosporium-Arten an Getreide, Septoria nodorum an Weizen, Botrytis cinera (Grauschimmel) an Erdbeeren und Reben, Cercospora arachidicola an Erdnüssen, Pseudocercosporella herpotrichoides an Weizen und Gerste, Pyricularia oryzae an Reis, Phytophthora infestans an Kartoffeln und Tomaten, Plasmopara viticola an Reben, Alternaria-Arten an Gemüse und Obst sowie Fusarium- und Verticillium-Arten.

Sie sind außerdem im Materialschutz (z.B. Holzschutz) anwendbar, beispielsweise gegen Paecilonyces variotii.

Die Mischungskomponenten (a) und (b) können gleichzeitig, und zwar gemeinsam oder getrennt, oder nacheinander ausgebracht werden, wobei die Reihenfolge bei getrennter Applikation im allgemeinen keine Auswirkung auf den Verhütungs- und Bekämpfungserfolg hat.

Die Mischungskomponenten (a) und (b) werden üblicherweise in einem Gewichtsverhältnis von 10:1 bis 0,1:1, vorzugsweise 5:1 bis 0,1:1, insbesondere 5:1 bis 0,2:1 angewendet.

Die Aufwandmengen der erfindungsgemäßen Mischungen liegen bei landwirtschaftlichen Kulturflächen je nach Art des gewünschten Effekts bei 0,5 bis 80, vorzugsweise 1 bis 30 und insbesondere 2 bis 15 kg/ha.

Die Aufwandmengen liegen dabei für die Mischungskomponente (a) bei 0,5 bis 60, vorzugsweise 1 bis 20 und insbesondere 2 bis 10 kg/ha.

Die Aufwandmengen für die Mischungskomponente (b) liegen entsprechend bei 0,2 bis 20, vorzugsweise 0,5 bis 10 und insbesondere 1 bis 5 kg/ha.

Bei der Saatgutbehandlung werden im allgemeinen Aufwandmengen der Mischung von 0,001 bis 50, vorzugsweise 0,001 bis 10 und insbesondere 0,1 bis 5 g pro kg Saatgut verwendet.

Die Verhütung und Bekämpfung der pflanzenpathogenen Pilze erfolgt durch getrennte oder gemeinsame Applikation der Mischungskomponenten (a) und (b) oder der Mischungen aus den Mischungskomponenten (a) und (b) durch Besprühen oder Bestäuben der Samen, der Pflanzen oder der Böden vor oder nach der Aussaat der Pflanzen oder vor oder nach dem Auflaufen der Pflanzen.

Die erfindungsgemäßen Mittel enthalten neben der Mischung noch mindestens ein übliche Formulierungshilfsmittel wie feste oder flüssige Trägerstoffe, oberflächenaktive Mittel und Haftmittel.

Unter flüssigen Trägerstoffen werden flüssige Lösungsmittel wie Wasser und organische Lösungsmittel verstanden, wobei letztere vor allem bei Verwendung von Wasser als Lösungsmittel die Funktion eines Hilfslösungsmittels haben. Als organische Lösungsmittel können verwendet werden: Aromaten wie Xylol, Toluol und Alkylnaphthaline, chlorierte Aromaten oder chlorierte aliphatische Kohlenwasserstoffe wie Chlorbenzole, Chlorethylene und Methylenchlorid, aliphatische Kohlenwasserstoffe wie Cyclohexan und Paraffine, z.B. Mineralölfraktionen, Alkohole wie Butanol, iso-Butanol, Cyclohexanol und Glykol sowie die zugehörigen Ether und Ester, Ketone wie Aceton, Methylethylketon, Methyl-iso-butylketon und Cyclohexanon, aprotisch dipolare Lösungsmittel wie Dimethylformamid, N-Methyl-2-pyrrolidon und Dimethylsulfoxid.

Als feste Trägerstoffe dienen beispielsweise Mineralerden wie Kieselsäuren, Kieselgele, Silikate, Talkum, Kaolin, Kalkstein, Kalk, Kreide, Bolus, Löß, Ton, Dolomit, Diatomeenerde, Calciumsulfat, Magnesiumoxid, gemahlene Kunststoffe, sowie pflanzliche Produkte wie Getreidemehl, Baumrinden-, Holz- und Nußschalenmehl, Cellulosepulver oder andere feste Trägerstoffe.

Geeignete oberflächenaktive Mittel sind nichtionogene und anionische Emulgiermittel/schaumerzeugende Mittel und Dispergiermittel:

- Fettsaure-Polyoxyethylenester wie Laurylalkohol-Polyoxyethylenetheracetat,
- Alkyl-Polyoxyethylen- oder -Polyoxypropylenether etwa von iso-Tridecylalkohol und Fettalkohol-Polyoxyethylenether,
- Alkylarylalkohol-Polyoxyethylenether wie Octylphenol-Polyoxyethylenether,
- Tributylphenol-Polyoxyethylenether,
- ethoxyliertes iso-Octyl-, Octyl- oder Nonylphenol oder Rizinusöl,
- Sorbitester,
- Arylsulfonsäuren, Alkylsulfonsäuren, Alkylschwefelsäuren,
- Alkali-, Erdalkali- und Ammoniumsalze von Arylsulfonsäuren, z.B. Lignin-, Phenol-, Naphthalin- und Dibutylnaphthalinsulfonsäure, Alkylsulfonsäuren, Alkylarylsulfonsäuren, Alkyl-, Laurylether- und Fettalkoholschwefelsäuren, Fettsäuren, sulfatierten Hexa-, Hepta- und Octadecanolen und Fettalkoholglykolethern,
- Kondensationsprodukte von sulfoniertem Naphthalin und seiner Derivate mit Formaldehyd,
- Kondensationsprodukte von Naphthalinsulfonsauren mit Phenol und Formaldehyd,
- Eiweißhydrolysate und
- insbesondere als Dispergiermittel: Lignin-Sulfitablaugen und Methylcellulose.

Als Haftmittel eignen sich beispielsweise: Carboxymethylcellulose; natürliche und synthetische pulverige, körnige oder latexförmige Polymere wie Gummiarabicum, Polyvinylalkohol, Polyvinylacecat, natürliche Phospholipide wie Kephaline und Lecithine, synthetische Phospholipide.

Die erfindungsgemäßen Mischungen bzw. die Mischungskomponenten (a) und (b) können beispielsweise in Form von direkt versprühbaren Lösungen, Pulver und Suspensionen oder in Form von hochprozentigen wäßrigen, öligen oder sonstigen Suspensionen, Dispersionen, Emulsionen, Öldispersionen, Pasten, Stäubemitteln, Streumitteln oder Granulaten aufbereitet und durch Versprühen, Vernebeln, Verstäuben, Verstreuen oder Gießen angewendet werden. Die Anwendungsform ist abhängig vom Verwendungszweck; sie soll in jedem Fall eine möglichst feine und gleichmäßige Verteilung der erfindungsgemäßen Mischung bzw. der Komponenten (a) und (b) gewährleisten.

Pulver Streu- und Stäubemittel können durch Mischen oder gemeinsames Vermahlen der Mischungskomponenten (a) und (b) oder der Mischung aus den Mischungskomponenten (a) und (b) mit einem festen Trägerstoff, wie vorstehend definiert, hergestellt werden.

Die Formulierungen werden in an sich bekannter Weise hergestellt, z.B. durch Zugabe von Lösungsmitteln und/oder Trägerstoffen. Den Formulierungen werden üblicherweise inerte Zusatzstoffe wie Emulgiermittel oder Dispergiermittel beigemischt.

Granulate (z.B. Umhüllungs-, Imprägnierungs- oder Homogengranulate) werden üblicherweise durch Bindung des Wirkstoffs oder der Wirkstoffe an einen festen Tragerstoff, wie vorstehend definiert, hergestellt.

Die Formulierungen enthalten im allgemeinen 0,1 bis 95 Gew.-%, vorzugsweise 0,5 bis 90 Gew.-% einer der Mischungskomponenten (a) und (b) bzw. der Mischung aus den Mischungskomponenten (a) und (b).

Die Anwendung der Mischungskomponenten (a) und (b), der Mischungen oder der entsprechenden Formulierungen erfolgt so, daß man die pflanzenpathogenen Pilze, deren Lebensraum oder die von ihnen freizuhaltenden Pflanzen, Samen oder Boden mit einer fungizid wirksamen Menge der Mischung, bzw. der Mischungskomponenten (a) und (b) bei getrennter Ausbringung, behandelt.

Ein bevorzugtes Verfahren zum Aufbringen eines Wirkstoff-Gemisches das mindestens je eine dieser Mischungskomponenten (a) und (b) ist das Aufbringen auf die oberirdischen Pflanzenteile, vor allem auf das Blattwerk (Blattapplikation). Anzahl der Applikationen und Aufwandmengen richten sich nach den biologischen und klimatischen Lebensbedingungen für den Erreger. Die Wirkstoffe können aber auch über den Erdboden durch das Wurzelwerk in die Pflanze gelangen (systemische Wirkung), indem man den Standort der Pflanze mit einer flüssigen Zubereitung tränkt oder die Substanzen in fester Form in den Boden einbringt, z.B. in Form von Granulat (Bodenapplikation).

Die erfindungsgemäße Mischung oder die Mischungskomponenten (a) und die Komponente (b) können auch auf Samenkörnern aufgebracht werden (Coating), indem man die Körner entweder nacheinander in einer flüssigen Zubereitung jeweils einer Mischungskomponente (a) und (b) tränkt oder sie mit der Mischung beschichtet.

Darüberhinaus sind in besonderen Fällen weitere Applikationsarten bei Pflanzen möglich, z.B. die gezielte Behandlung der Knospen oder der Fruchtstände.

Anwendungsbeispiele

Folgende Stoffe wurden eingesetzt:

Lösung 1 (Komponente (a)): Ein Extrakt aus Reynoutria sachalinensis wurde hergestellt, indem man 100 g frisches Pflanzenmaterial grob zerkleinerte und mit 750 ml Ethanol 4 Stunden in einer Extraktions-Apparatur extrahierte. Der so gewonnene Rohextrakt wurde am Rotationsverdampfer bis auf 95 ml eingeengt und anschließend mit 4 mlAceton und 1 ml Emulgiermittel versetzt (vgl. EP-A 307 510).

Lösung 2 (Komponente (b)):

In 100 g Wasser wurden gelöst:

| 40,0 | g | Harnstoff, |
|---|---|---|
| 8,5 | g | Ammoniak, |
| 2,08 | g | Salpetersäure |
| 5,0 | g | Magnesiumoxid |
| 0,11 | g | Borsäure |
| 0,8 | g | Kupfersulfat |
| 0,01 | g | Eisensulfat |
| 2,1 | g | Mangancarbonat |
| 0,009 | g | Ammoniummolybdat |
| 0,04 | g | Zinksulfat |
| 1,0 | g | Ethylendiamin-N,N,N',N'-tetraessigsaure Tetranatriumsalz (Molmasse: 380) |

und

| 0,31 | g | N-2-Hydroxyethyl)ethylendiamintriessigsäure Trinatriumsalz (Molmasse: 344) |
|---|---|---|

Es wurde eine Düngerlösung folgender Zusammensetzung erhalten:

| | | |
|---|---|---|
| 27,0 | Gew.-% | Gesamtstickstoff: |
| 18,7 | Gew.-% | Carbamidstickstoff |
| 3.6 | Gew.-% | Ammoniumstickstoff |
| 4,7 | Gew.-% | Nitratstickstoff |
| 3,0 | Gew.-% | wasserlösliches Magnesiumoxid |
| 0,02 | Gew.-% | wasserlösliches Bor |
| 0,2 | Gew.-% | wasserlösliches Kupfer |
| 0,02 | Gew.-% | wasserlösliches Eisen |
| 1,0 | Gew.-% | wasserlösliches Mangan |
| 0,005 | Gew.-% | wasserlösliches Molybdän |
| 0,01 | Gew.-% | wasserlösliches Zink |
| 1,0 | Gew.-% | Ethylendiamin-N,N,N',N'-tetraessigsäure Tetranatriumsalz und |
| 0,31 | Gew.-% | N-(2-Hydroxyethyl)ethylendiamintriessigsäure Trinatriumsalz |

und dem Rest zu 100 Gew.-% Wasser.

In den folgenden Versuchen wurde eine Mischung verwendet, welche aus entsprechenden Anteilen der Lösungen 1 und 2 und Wasser hergestellt worden war.

Eine Mischung von Sporen von Erysiphe cichoracaerum und Sphaerotheca fuliginea wurde gewonnen, indem man stark mit diesen pflanzenpathogenen Pilzen befallene Blätter von Gurken (Sorte : Chinesische Schlangengurke) mit reichlich Wasser abspülte. Dabei wurden pro Liter Wasser je 20 Gurkenblätter verwendet, die mit der Hand jeweils unter leichtem Zusammendrücken zehnmal untergetaucht wurden.

Gurken der Sorte "Chinesische Schlangengurke" wurden im ersten Laubblattstadium mit den nachstehend in den Tabellen angegebenen wäßrigen Aufbereitungen tropfnaß gesprüht. Einen Tag nach der Applikation der Mischungsaufbereitung wurde das erste Laubblatt der Gurken mit der vorstehend beschriebenen Sporensuspension inokuliert. Inkubation und Infektion der inokulierten Pflanzen erfolgte in einer Gewächshauskammer bei 20 bis 25 °C und 50 bis 80 % relativer Luftfeuchte für die in den Tabellen angegebenen Zeiträume. Der Anteil der befallenen Blattfläche an der Gesamtblattfläche wurde visuell ermittelt.

Diese visuell ermittelten Werte für den Prozentanteil befallener Blattfläche wurden in Wirkungsgrade als % der unbehandelten Kontrolle umgerechnet. Wirkungsgrad 0 ist gleicher Befall wie in der unbehandelten Kontrolle, Wirkungsgrad 100 ist 0 % Befall. Die zu erwartenden Wirkungsgrade für Wirkstoffkombinationen wurden nach der Colby-Formel ermittelt (S. R. Colby "Calculating synergistic and antagonistic responses of herbicide combinations", Weeds 15, Seiten 20 bis 22 (1967)) und mit den beobachteten Wirkungsgraden verglichen.

Colby Formel:

$$E = x + y - x \cdot y/100$$

E   zu erwartender Wirkungsgrad, ausgedrückt in % der unbehandelten Kontrolle, beim Einsatz der Mischung zweier Wirkstoffe A und B in den Konzentrationen a und b

x   der Wirkungsgrad, ausgedrückt in % der unbehandelten Kontrolle, beim Einsatz des Wirkstoffs A in der Konzentration a

y   der Wirkungsgrad, ausgedrückt in % der unbehandelten Kontrolle, beim Einsatz des Wirkstoffs B in der Konzentration b

Bei einem Wirkungsgrad von 0 entspricht der Befall der behandelten Pflanzen demjenigen der unbehandelten Kontrollpflanzen; bei einem Wirkungsgrad von 100 weisen die behandelten Pflanzen keinen Befall auf.

Aus den folgenden Tabellen geht hervor, daß die experimentell ermittelten effektiven Wirkungsgrade der Mischungen aus den Komponenten (a) und (b) höher sind, als die nach der Colby-Formel vorausberechneten.

Anwendungsbeispiel 1

Unbehandelte Kontrolle : 26 % Befall der unbehandelten Probe 7 Tage nach Behandlung mit den Sporen

Tabelle 1.1.

| Wirkungsgrad der einzelnen Wirkstoffe | | |
|---|---|---|
| Komponente | Wirkstoffgehalt in der Spritzbrühe[Gew.-%] | Wirkungsgrad bezogen auf die unbehandelte Kontrolle [%] |
| (a) | 1,5 | 88 |
| | 1 | 62 |
| | 0,5 | 35 |
| (b) | 1 | 35 |
| | 0,5 | 23 |

Tabelle 1.2:

| Wirkungsgrad der Mischung | | | |
|---|---|---|---|
| Mischung: Gehalt an (a) und (b) [Gew.-%] | | Beobachteter Wirkungsgrad [%] | Erwarteter Wirkungsgrad [%] nach Colby (s.o.) |
| (a) | (b) | | |
| 1 | 1 | 100 | 75 |
| 0,5 | 1 | 100 | 57 |
| 1 | 0,5 | 92 | 70 |
| 0,5 | 0,5 | 88 | 50 |

Anwendungsbeispiel 2

Unbehandelte Kontrolle: 80 % Befall, 14 Tage nach Behandlung mit den Sporen

Tabelle 2.1:

| Wirkungsgrad der einzelnen Wirkstoffe | | |
|---|---|---|
| Komponente | Wirkstoffgehalt in der Spritzbrühe [Gew.-%] | Wirkungsgrad bezogen auf die unbehandelte Kontrolle [%] |
| (a) | 1,5 | 78 |
| | 1 | 40 |
| | 0,5 | 25 |
| (b) | 1 | 10 |
| | 0,5 | 4 |

Tabelle 2.2:

| Wirkungsgrad der Mischung | | | |
|---|---|---|---|
| Mischung: Gehalt an (a) und (b) [Gew.-%] | | Beobachteter Wirkungsgrad [%] | Erwarteter Wirkungsgrad [%] nach Colby (s.o.) |
| (a) | (b) | | |
| 1 | 1 | 89 | 46 |
| 0,5 | 1 | 86 | 33 |
| 1 | 0,5 | 76 | 42 |

Tabelle 2.2:   (fortgesetzt)

| Wirkungsgrad der Mischung | | | |
|---|---|---|---|
| Mischung: Gehalt an (a) und (b) [Gew.-%] | | Beobachteter Wirkungsgrad [%] | Erwarteter Wirkungsgrad [%] nach Colby (s.o.) |
| (a) | (b) | | |
| 0.5 | 0,5 | 64 | 28 |

Anwendungsbeispiel 3

Unbehandelte Kontrolle : 25 % Befall der unbehandelten Probe 7 Tage nach Behandlung mit den Sporen

Tabelle 3.1:

| Wirkungsgrad der einzelnen Wirkstoffe | | |
|---|---|---|
| Komponente | Wirkstoffgehalt in der Spritzbrühe [Gew.-%] | Wirkungsgrad bezogen auf die unbehandelte Kontrolle [%] |
| (a) | 1,5 | 92 |
| | 1 | 72 |
| | 0,5 | 56 |
| (b) | 1 | 60 |
| | 0,5 | 52 |

Tabelle 3.2:

| Wirkungsgrad der Mischung | | | |
|---|---|---|---|
| Mischung: Gehalt an (a) und (b) [Gew.-%] | | Beobachteter Wirkungsgrad [%] | Erwarteter Wirkungsgrad [%] nach Colby (s.o.) |
| (a) | (b) | | |
| 1 | 1 | 100 | 89 |
| 0,5 | 1 | 100 | 82 |
| 1 | 0,5 | 96 | 87 |
| 0,5 | 0,5 | 92 | 79 |

Anwendungsbeispiel 4

Unbehandelte Kontrolle : 80 % Befall der unbehandelten Probe 14 Tagen nach Behandlung mit den Sporen

Tabelle 4.1:

| Wirkungsgrad der einzelnen Wirkstoffe | | |
|---|---|---|
| Komponente | Wirkstoffgehalt in der Spritzbrühe [Gew.-%] | Wirkungsgrad bezogen auf die unbehandelte Kontrolle [%] |
| (a) | 1,5 | 84 |
| | 1 | 44 |
| | 0,5 | 25 |
| (b) | 1 | 34 |
| | 0,5 | 25 |

Tabelle 4.2:

| Wirkungsgrad der Mischung | | | |
| --- | --- | --- | --- |
| Mischung: Gehalt an (a) und (b) [Gew.-%] | | Beobachteter Wirkungsgrad [%] | Erwarteter Wirkungsgrad [%] nach Colby (s.o.) |
| (a) | (b) | | |
| 1 | 1 | 93 | 63 |
| 0,5 | 1 | 88 | 50 |
| 1 | 0,5 | 83 | 58 |
| 0,5 | 0,5 | 56 | 44 |

**Patentansprüche**

1. Mischung, bestehend im wesentlichen aus

   a) einer anwendungsfähigen Aufbereitung der Pflanze Reynoutria sachalinensis und

   b) einem Stickstoff-Dünger, welcher 1 bis 10 Gew.-% pflanzenverfügbares Magnesium und jeweils von 0,001 bis 5 Gew.-% eines oder mehrerer der Elemente Bor, Kupfer, Eisen, Mangan, Molybän und Zink in wasserlöslicher Form enthält,

   in einer synergistisch wirksamen Menge.

2. Mischung nach Anspruch 1, enthaltend zusätzlich Komplexbildner.

3. Mischung nach Anspruch 1 oder 2, bestehend zu 95 bis 98 Gew-% aus den Mischungskomponenten (a) und (b).

4. Fungizide Mischung nach Anspruch 1, **dadurch gekennzeichnet, daß** das Gewichtsverhältnis der Mischungskomponente (a), zu der Mischungskomponente (b) im Bereich 10:1 bis 0,1:1 liegt.

5. Mittel zur Verhütung des Befall durch pflanzenpathogene Pilze und zur Bekämpfung von pflanzenpathogene Pilzen, enthaltend die Mischung gemäß Anspruch 1 oder 2 und mindestens ein gegen pflanzenpathogene Pilze inertes übliches Formulierungshilfsmittel

6. Verfahren zur Verhütung des Befalls durch pflanzenpathogene Pilze und/oder zur Bekämpfung von pflanzenpathogenen Pilzen, **dadurch gekennzeichnet, daß** man die Pilze, deren Lebensraum oder die von ihnen freizuhaltenden Pflanzen, Samen oder Böden mit der Mischungskomponente (a) gemäß Anspruch 1 und der Mischungskomponente (b) gemäß Anspruch 1 behandelt.

7. Verfahren nach Anspruch 4, **dadurch gekennzeichnet, daß** man die Mischungskomponente (a) gemäß Anspruch 1 und die Mischungskomponente (b) gemäß Anspruch 1 gleichzeitig, und zwar gemeinsam oder getrennt, oder nacheinander ausbringt.

8. Verfahren nach Anspruch 4 oder 5, **dadurch gekennzeichnet, daß** man die Mischungskomponente (a) gemäß Anspruch 1 in einer Menge von 0,5 bis 60 kg/ha aufwendet.

9. Verfahren nach den Ansprüchen 4 bis 6, **dadurch gekennzeichnet, daß** man die Mischungskomponente (b) gemäß Anspruch 1 in einer Menge von 0,2 bis 20 kg/ha anwendet.

10. Verwendung der Mischungskomponente (a) gemäß Anspruch 1 zur Herstellung einer synergistisch fungizid wirksamen Mischung gemäß Anspruch 1.

11. Verwendung der Mischungskomponente (b) gemäß Anspruch 1 zur Herstellung einer synergistisch fungizid wirk-

EP 0 930 824 B1

samen Mischung gemäß Anspruch 1.

**Claims**

1.  A mixture, composed essentially of

    a) a ready-to-use preparation of the plant Reynoutria sachalinensis
    and

    b) a nitrogen fertilizer which comprises from 1 to 10% by weight of plant-available magnesium and in each case from 0.001 to 5% by weight of one or more of the elements boron, copper, iron, manganese, molybdenum and zinc in water-soluble form,

    in a synergistically active amount.

2.  A mixture as claimed in claim 1, comprising, in addition, complexing agents.

3.  A mixture as claimed in claim 1 or 2, in which the components (a) and (b) amount to 95 to 98% by weight.

4.  A fungicidal mixture as claimed in claim 1, wherein the weight ratio of component (a) to component (b) is in the range from 10:1 to 0.1:1.

5.  A composition for preventing infection by phytopathogenic fungi and for controlling phytopathogenic fungi, comprising the mixture as claimed in claim 1 or 2 and at least one customary formulation auxiliary which is inert to phytopathogenic fungi.

6.  A method of preventing infection by phytopathogenic fungi and/or of controlling phytopathogenic fungi, which comprises treating the fungi, their environment, or the plants, seeds or soils to be kept free from them with component (a) as set forth in claim 1 and component (b) as set forth in claim 1.

7.  A method as claimed in claim 6, wherein component (a) as set forth in claim 1 and component (b) as set forth in claim 1 are applied simultaneously, that is, jointly or separately, or in succession.

8.  A method as claimed in claim 6 or 7, wherein component (a) as set forth in claim 1 is applied in an amount of from 0.5 to 60 kg/ha.

9.  A method as claimed in any of claims 6 to 8, wherein component (b) as set forth in claim 1 is applied in an amount of from 0.2 to 20 kg/ha.

10. The use of component (a) as set forth in claim 1 for the preparation of a synergistic, fungicidally active mixture as claimed in claim 1.

11. The use of component (b) as set forth in claim 1 for the preparation of a synergistic, fungicidally active mixture as claimed in claim 1.

**Revendications**

1.  Mélange consistant essentiellement en

    a) un produit, prêt à l'emploi, à base de la plante Reynoutria sachalinensis
    et
    b) un engrais azoté contenant 1 à 10 % en poids de magnésium disponible pour la plante et 0,001 à 5 % en poids (pour chacun d'entre eux) d'un ou plusieurs des éléments bore, cuivre, fer, manganèse, molybdène et zinc, sous forme soluble dans l'eau,
    en quantité synergétique efficace.

10

**2.** Mélange selon la revendication 1, contenant en outre des complexants.

**3.** Mélange selon la revendication 1 ou 2, consistant en 95 à 98 % en poids des composants de mélange (a) et (b).

**4.** Mélange fongicide selon la revendication 1, **caractérisé par le fait que** les proportions relatives en poids entre le composant de mélange (a) et le composant de mélange (b) se situent dans l'intervalle de 10 : 1 à 0,1 : 1.

**5.** Produit pour protéger contre une attaque par les mycètes phytopathogènes et pour combattre les mycètes phytopathogènes, contenant le mélange selon la revendication 1 ou 2 et au moins un produit auxiliaire de formulation usuel, inerte à l'égard des mycètes phytopathogènes.

**6.** Procédé pour protéger contre une attaque par les mycètes phytopathogènes et/ou pour combattre les mycètes phytopathogènes, **caractérisé par le fait que** l'on traite les mycètes, leur habitat ou les végétaux, semences ou sols à protéger contre les mycètes phytopathogènes par le composant de mélange (a) selon la revendication 1 et le composant de mélange (b) selon la revendication 1.

**7.** Procédé selon la revendication 4, **caractérisé par le fait que** l'on applique le composant de mélange (a) selon la revendication 1 et le composant de mélange (b) selon la revendication 1 en même temps, ensemble ou séparément, ou successivement.

**8.** Procédé selon la revendication 4 ou 5, **caractérisé par le fait que** l'on applique le composant de mélange (a) selon 1a revendication 1 en quantité de 0,5 à 60 kg/ha.

**9.** Procédé selon les revendications 4 à 6, **caractérisé par le fait que** l'on applique le composant de mélange (b) selon la revendication 1 en quantité de 0,2 à 20 kg/ha.

**10.** Utilisation du composant de mélange (a) selon la revendication 1 pour la préparation d'un mélange fongicide à activité synergétique selon la revendication 1.

**11.** Utilisation du composant de mélange (b) selon la revendication 1 pour la préparation d'un mélange fongicide à activité synergétique selon la revendication 1.